Europäisches Patentamt

European Patent Office

Office européen des brevets

(11) Numéro de publication: **0 292 369 B1**

(12) **FASCICULE DE BREVET EUROPEEN**

(45) Date de publication du fascicule du brevet:
30.10.91 Bulletin 91/44

(51) Int. Cl.⁵: **B60P 7/13,** B61D 45/00

(21) Numéro de dépôt: **88401170.1**

(22) Date de dépôt: **13.05.88**

(54) **Dispositif d'immobilisation de conteneurs sur une plateforme de chargement d'un véhicule et plateforme pourvue d'un tel dispositif.**

(30) Priorité: 22.05.87 FR 8707546

(43) Date de publication de la demande:
23.11.88 Bulletin 88/47

(45) Mention de la délivrance du brevet:
30.10.91 Bulletin 91/44

(84) Etats contractants désignés:
AT BE CH DE ES FR GB GR IT LI LU NL SE

(56) Documents cités:
EP-A- 0 131 984
DE-A- 2 130 211
US-A- 3 160 117
US-A- 3 507 226
US-A- 3 557 710

(73) Titulaire: ARBEL FAUVET RAIL S.A.
140 rue du Paradis
F-59500 Douai (FR)

(72) Inventeur: Peugniez, Jean Marie
25 rue de Roncourt
F-59169 Cantin (FR)

(74) Mandataire: Ecrepont, Robert
Cabinet Ecrepont 12 Place Simon Vollant
F-59800 Lille (FR)

Jouve, 18, rue Saint-Denis, 75001 PARIS

## Description

L'invention se rapporte à un dispositif d'immobilisation de conteneurs sur une plateforme de chargement d'un véhicule tel un wagon de chemin de fer ou un véhicule routier.

Pendant leur transport tant par rail que par route, les conteneurs doivent être immobilisés sur leur plateforme.

A cet effet, il est connu (FR-A-2.504.484, 2.449.013 et 2.542.511) d'équiper ces plateformes de dispositifs d'immobilisation de conteneurs comprenant des chevilles destinées à s'engager dans des logements prévus à cet effet dans la base des conteneurs et notamment aux quatre coins de leur base.

Ces conteneurs, qui possèdent des dimensions normalisées, existent toutefois dans différentes dimensions.

Comme une même plateforme peut recevoir des conteneurs de dimensions différentes, les emplacements des logements sont très variables.

Si l'on veut que la plateforme ait des chevilles en tous ces emplacements, on comprend que le nombre important de chevilles que cela nécessite grève grandement le prix de revient d'un tel wagon.

En outre, celles qui dans un chargement spécifique ne sont pas utilisées, encombrent la plateforme et gênent la mise en place des conteneurs.

Pour y remédier, on connaît une plateforme (FR-A-2.504.484) comprenant des dispositifs d'immobilisation constitués de deux rails longitudinaux montés chacun sur un des côtés de la dite plateforme et sur lesquels sont articulés des organes de maintien qui sont chacun pourvus de l'une des dites chevilles. On connaît également (FR-A-2.449.013) un dispositif d'immobilisation dont les chevilles sont portées par des organes simplement guidés en translation au long d'un rail bordant localement chacun des bords de la plateforme.

Les chevilles peuvent ainsi avec leur organe de maintien coulisser longitudinalement par rapport à la plateforme pour venir occuper une position lui permettant de coopérer avec les logements de ceux-ci pour les immobiliser.

Toutefois, ne serait-ce qu'eu égard aux éléments élastiques de rappel, les limites de ce guidage en translation sont très strictes et permettent tout au plus de corriger les tolérances de positionnement des chevilles et des logements.

Cela ne suffit donc pas pour ne prévoir qu'un nombre moins important de chevilles.

De plus, ces chevilles sont fixes en rotation et gênent l'accès à la plateforme pour la pose des conteneurs.

On connaît également (US-A-3.557.710) un tel dispositif dans lequel :

— les faces en vis à vis, d'une part, des plans d'appui des organes de maintien et, d'autre part, de ces organes de maintien eux-mêmes sont pourvues de formes complémentaires qui, sans s'opposer à la manoeuvre de l'organe de maintien, assurent son immobilisation en translation dans le plan d'appui au moins dans une direction parallèle à l'axe longitudinal de la plateforme,

— ces formes complémentaires consistent l'une en un perçage et l'autre en un doigt suffisamment court pour permettre le dégagement de ces formes l'une de l'autre par relevage de l'organe de maintien,

— entre au moins certains des points où peuvent prendre place les chevilles, le rail est dépourvu de tout obstacle au coulissement axial de l'organe de maintien qui, après relevage, peut ainsi être amené au regard de points différents pour y être immobilisé, et

— au moins entre certains des points successifs où peuvent prendre place des chevilles d'une part, le plan d'appui présente au moins une interruption et d'autre part l'organe de maintien et une pièce associée à la plateforme comprennent des moyens complémentaires d'arrêt de l'engagement de l'organe de maintien dans la dite interruption dans une position où la cheville s'éclipse au dessous du plan de la plateforme.

Lors de leur utilisation, l'organe de maintien repose sur un plan d'appui de la plateforme ou du dessus d'une console. Toutefois, par leur double articulation, lors de leur inutilisation, ces chevilles peuvent aussi bien s'insérer dans l'interruption du plan d'appui et dégager la plateforme que rester rabattues vers l'extérieur de la plateforme.

Cela augmente malheureusement l'encombrement en largeur du véhicule et cet encombrement accru peut être un obstacle à la circulation sur certains réseaux et notamment sur le réseau britannique dont le gabarit est plus étroit.

En outre, ces moyens pourvus de multiples articulations sont complexes.

L'invention a pour objet un véhicule dont la plateforme de chargement bien que munie de dispositifs d'immobilisation de conteneurs de tailles variables ne risque pas de modifier le gabarit d'un tel véhicule.

A cet effet, l'invention a pour objet un dispositif de type précité notamment caractérisé en ce que l'organe de maintien porte une butée coopérant avec une pièce solidaire de la plateforme pour éviter le rabattement de l'organe de maintien vers l'extérieur.

L'invention sera bien comprise à l'aide de la description ci-après faite à titre d'exemple non limitatif en regard du dessin ci-annexé qui représente schématiquement :

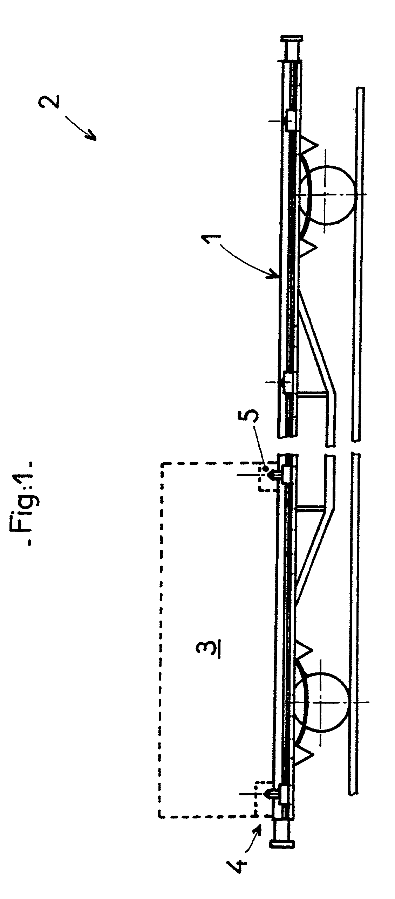

— figure 1 : en vue de profil, un véhicule équipé du dispositif selon l'invention,

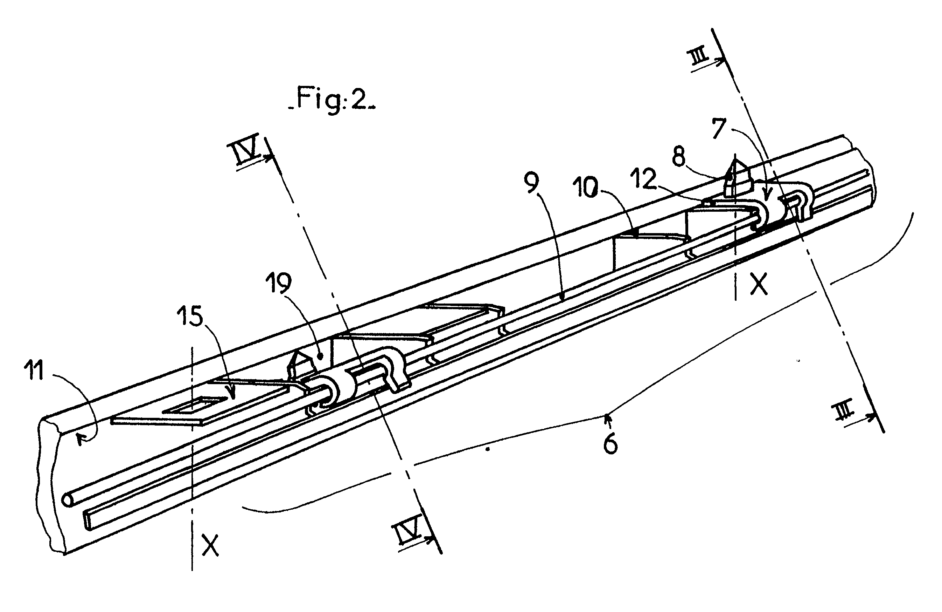

— figure 2 : le dispositif de maintien vu en perspective,

— figure 3 : une vue en coupe selon III-III de la figure 2,

— figure 4 : une vue en coupe selon IV-IV de la figure 2,

En se reportant au dessin, on voit une plateforme de chargement 1 d'un véhicule 2 telle celle d'un véhicule ferroviaire. Destinée à transporter des conteneurs 3 dont la base 4 est pourvue de moyens de positionnement tels des logements 5 généralement situés dans ses quatre coins, cette plateforme 1 est munie de dispositif 6 d'immobilisation de ces conteneurs.

De manière connue, ces dispositifs comprennent des organes de maintien 7 pourvus chacun de moyens 8 destinés à coopérer avec l'un des moyens de positionnement 5 tels une cheville 8 destinée à s'engager dans l'un des logements 5.

De manière également connue, pour recevoir les organes de maintien 7, ces dispositifs 6 comprennent chacun un rail longitudinal 9 porté par des supports 10 fixés sur les faces externes des longerons 11 de la plateforme 1, le rail 9 est associé aux supports 10 et aux organes de maintien 7 afin de permettre l'articulation des organes 7 autour de l'axe du rail 9.

Par exemple, le rail 9 aura une forme cylindrique de révolution et sera solidarisé aux supports tandis que l'organe de maintien 7 sera constitué d'une plaque 12 pourvue d'un charnon 13 qui, par son logement 14, est enfilé sur le rail 9.

L'organe de maintien 7 repose sur un plan d'appui 15 solidaire de la plateforme tel le dessus de cette plateforme ou matérialisé par le dessus d'une console 16 solidarisée à la plateforme et par exemple à la face externe du longeron 11.

Ce plan d'appui 15 se retrouve au moins en tous les points "X" où une cheville 8 peut être nécessaire compte tenu de toutes les combinaisons de dimensions des conteneurs que pourra porter la plateforme.

Les faces en vis à vis des organes de maintien 7 et des plans d'appui 15 de ces organes de maintien sont pourvues de formes complémentaires 17, 18 qui, sans s'opposer à la manoeuvre de l'organe de maintien, assurent son immobilisation en translation dans le plan d'appui au moins dans une direction parallèle à l'axe longitudinal de la plateforme.

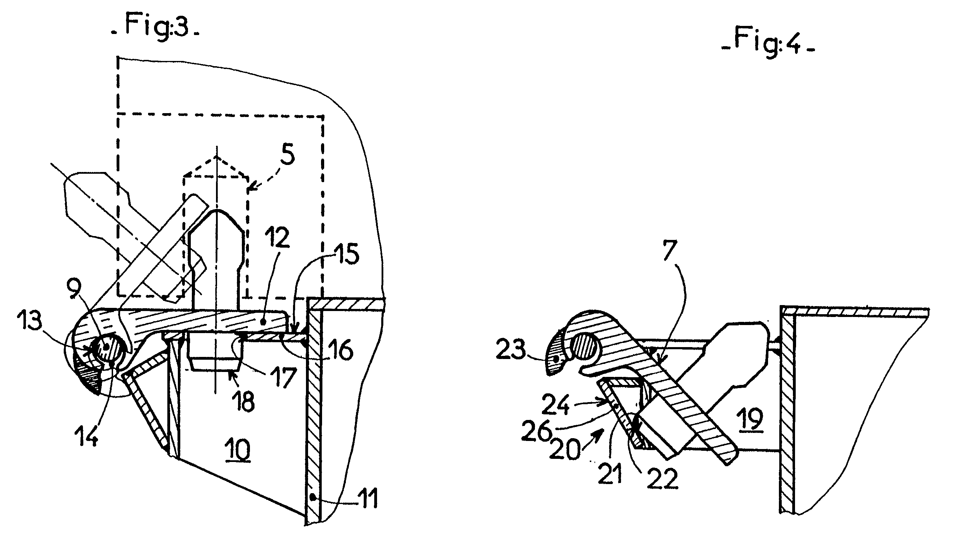

Par exemple, ces formes complémentaires consistent l'une en un perçage 17 et l'autre en un doigt 18, suffisamment court pour permettre le dégagement de ces formes 17, 18 l'une de l'autre par relevage de l'organe de maintien 7 (en traits fins sur la figure 3).

Entre au moins certains des points "X" où peuvent prendre place les chevilles 8, le rail est dépourvu de tout obstacle au coulissement axial de l'organe de maintien 7 qui, ainsi après relevage, peut être amené au regard de points "X" différents pour y être immobilisé.

Il suffit de ce fait de prévoir un nombre de chevilles correspondant exactement au cas où seuls des petits conteneurs sont prévus puis, en fonction des chargements spécifiques, les amener aux points "X" nécessaires.

Au moins entre certains des points "X" successifs où peuvent prendre place des chevilles et, par exemple, entre ceux de ces points "X" successifs qui seront les plus éloignés l'un de l'autre, d'une part, le plan d'appui 15 présente au moins une interruption 19 et d'autre part l'organe de maintien 7 et une pièce 20 associée à la plateforme 1 et comprenant des moyens complémentaires 21, 22 d'arrêt de l'organe de maintien dans une position où la cheville 8 s'éclipse au dessous du plan de la plateforme 1 (figure 4).

L'organe de maintien avec sa cheville, peut ainsi être amené au regard de l'interruption 19 du plan d'appui où il peut être rabattu vers l'intérieur et dégager le plan de la plateforme. Cela évite à cette organe d'avoir à être rabattu vers l'extérieur et d'accroître localement le gabarit du véhicule. Selon une caractéristique de l'invention, pour éviter que, par habitude, un préposé à la manoeuvre rabatte l'organe de maintien vers l'extérieur, cet organe porte avantageusement une butée 23 coopérant avec une pièce 24 solidaire de la plateforme.

Le doigt 18 consiste de préférence en un prolongement de la cheville.

La pièce 24 solidaire de la plateforme avec laquelle coopère la butée 23 consiste en la face externe d'un support 26 et dont l'autre face 21 peut quant à elle coopérer avec l'extrémité 22 du doigt 18 pour constituer les moyens complémentaires d'arrêt évoqués plus haut.

Cette traverse se prolonge alors sur toute la plage de déplacement de l'organe de maintien.

Elle est avantageusement associée aux consoles 16 des plans d'appui 15.

Lorsque les chevilles sont éclipsées, elles sont parfaitement protégées contre les chocs des chariots et containers.

## Revendications

1. Dispositif d'immobilisation de conteneurs sur une plateforme de chargement d'un véhicule tel un wagon de chemin de fer ou un véhicule routier, présentant les caractéristiques suivantes :

cette plateforme (1) est destinée à transporter des conteneurs (3) dont la base (4) est pourvue de moyens de positionnement (5) tels des logements généralement situés dans ses quatre coins, ledit dispositif comprend des organes de maintien (7) pourvus chacun de moyens (8), tels une cheville, destinés à coopérer avec l'un des moyens de positionnement (5) et, pour recevoir les dits organes de maintien (7), comprend un rail longitudinal (9) porté par des supports (10) fixés à la plateforme (1),

le rail (9) est associé aux supports (10) et aux organes de maintien (7) de manière à permettre l'articulation des organes (7) autour de l'axe de rail (9) qui, par exemple, présente à cet effet, une forme cylindrique de révolution et sera solidaire de la plateforme tandis que l'organe de maintien (7) sera constitué d'une plaque (12) pourvue d'un charnon (13) qui, par son logement (14), est enfilé sur le rail (9),

l'organe de maintien (7) repose sur un plan d'appui (15) solidaire de la plateforme tel le dessus de cette plateforme ou matérialisé par le dessus d'une console (16) solidarisée à la plateforme (1), ce plan d'appui (15) se retrouve au moins en tous les points (X) où une cheville (8) peut être nécessaire compte tenu de toutes les combinaisons des dimensions des conteneurs que pourra porter la plateforme,

les faces en vis à vis, d'une part, des plans d'appui (15) des organes de maintien (7) et, d'autre part, de ces organes de maintien eux-même, sont pourvues de formes complémentaires (17, 18) qui, sans s'opposer à la manoeuvre de l'organe de maintien, assurent son immobilisation en translation dans le plan d'appui au moins dans une direction parallèle à l'axe longitudinal de la plateforme,

les formes complémentaires consistent l'une en un perçage (17) et l'autre en un doigt (18) suffisamment court pour permettre le dégagement de ces formes (17, 18) l'une de l'autre par relevage de l'organe de maintien (7),

entre au moins certains des points (X) où peuvent prendre place les chevilles (8), le rail est dépourvu de tout obstacle au coulissement axial de l'organe de maintien (7) qui, aprés relevage, peut ainsi être amené au regard de points (X) différents pour y être immobilisé,

au moins entre certains des points (X) successifs où peuvent prendre place des chevilles (8) d'une part, le plan d'appui (15) présente au moins une interruption (19) et d'autre part l'organe de maintien (7) et une pièce (20) associée à la plateforme (1) comprennent des moyens complémentaires (21, 22) d'arrêt de l'engagement de l'organe de maintien (7) dans la dite interruption (19) dans une position où la cheville (8) s'éclipse au dessous du plan de la plateforme (1),

ce dispositif étant **CARACTERISE** en ce que l'organe de maintien porte une butée (23) coopérant avec une pièce (24) solidaire de la plateforme pour éviter le rabattement de l'organe de maintien vers l'extérieur.

2. Dispositif selon la revendication 1 **caractérisé** en ce que le doigt (18) consiste en un prolongement de la cheville (8).

3. Dispositif selon la revendication 2 **caractérisé** en ce que la pièce (24) solidaire de la plateforme et coopérant avec la butée (23) est constituée par la face externe d'un support (26) dont l'autre face (21) coopère quant à elle avec l'extrémité (22) du doigt (18) pour constituer les moyens complémentaires d'arrêt.

4. Dispositif selon la revendication 3 **caractérisé** en ce que la traverse (24) se prolonge sur toute la plage de déplacement de l'organe de maintien.

5. Dispositif selon la revendication 3 ou 4 **caractérisé** en ce que le plan d'appui (15) solidaire de la plateforme est matérialisé par le dessus de console (16) et en ce que la traverse (24) est associé aux consoles (16) des plans d'appui (15).

6. Plateforme (1) de véhicule caractérisée en ce qu'elle est pourvue de dispositifs d'immobilisation selon l'une quelconque des revendications 1 à 5.

**Patentansprüche**

1. Vorrichtung zum Verriegeln von Containern auf einer Ladefläche eines Fahrzeugs, beispielsweise eines Eisenbahnwagens oder eines Straßenfahrzeugs, die folgende Merkmale aufweist :

die Ladefläche (1) ist für den Transport von Containern (3) vorgesehen, deren Boden (4) mit Positioniermitteln (5) versehen ist, beispielsweise Lageranordnungen, die ganz allgemein an den vier Ecken angeordnet sind,

die Vorrichtung weist Halteelemente (7) auf, die jeweils mit einem Mittel (8), beispielsweise Zapfen, zum Zusammenwirken mit jeweils einem der Positioniermittel (5) versehen sind, und zur Aufnahme der Halteelemente (7) weist sie eine Längsschiene (9) auf, die auf fest an der Ladefläche (1) angebrachten Auflagern (10) abgestützt ist,

die Schiene (9) ist den Auflagern (10) und den Halteelementen (7) so zugeordnet, daß die Verschwenkbarkeit der Halteelemente (7) um die Schienenachse (9) gegeben ist, welche hierfür beispielsweise eine zylindrische Rotationsform aufweist und fest mit der Ladefläche verbunden ist, während das Halteelement (7) aus einer Platte (12) mit Umgriffteil (13) besteht, dessen Aufnahmeabschnitt (14) auf die Schiene (9) aufreihbar ist,

das Halteelement (7) liegt auf einer Auflagefläche (15) auf, die fest mit der Ladefläche, beispielsweise der Unterseite derselben, verbunden oder auf der Unterseite eines Tragteils (16) ausgebildet ist, welches fest mit der Ladefläche (1) verbunden ist, wobei diese Auflagefläche (15) zumindest an all den Punkten (X) vorhanden ist, an denen im Hinblick auf alle Kombinationen bei den Abmessungen der Container, die auf die Ladefläche aufgeladen werden könnte, ein Zapfen (8) gegebenenfalls erforderlich ist,

die einandergegenüberliegenden Stirnflächen der Auflageflächen (15) der Halteelemente (7) einerseits und der Halteelemente selbst andererseits weisen komplementäre Ausformungen (17, 18) auf, die, ohne die Betätigung des Halteelementes zu behindern, dessen Sicherung gegen Verschiebebewegungen in der Auflageebene zumindest in einer Richtung gewährleisten, welche parallel zur Längsachse der Ladefläche verläuft,

die komplementären Ausformungen bestehen zum einen aus einer Bohrung (17) und zum anderen aus einem Stift (18), der kurz genug ist, um die Trennung dieser Ausformungen (17, 18) voneinander durch Anheben des Halteelementes (7) zuzulassen,

zwischen mindestens einigen der Punkte (X), an denen die Zapfen (8) montiert werden können, weist die Schiene Keinerlei Hindernis für die axiale Gleitbewegung des Halteelementes (7) auf, das nach dem Anheben auf diese Weise in eine Stellung gegenüber den verschiedenen Punkten (X) bringbar ist, um dort verriegelt zu werden,

zumindest zwischen einigen aufeinanderfolgenden Punkten (X), an denen die Zapfen (8) angebracht werden können, weist die Auflagefläche (15) mindestens eine Lücke (19) auf, und andererseits weisen das Halteelement (7) und ein der Ladefläche (1) zugeordnetes Teil (20) komplementäre Verriegelungsmittel (21, 22) für den Eingriff des Halteelementes (7) in die Lücke (19) in einer Stellung auf, in der der Zapfen (8) unter die Ebene der Ladefläche (1) greift, **dadurch GEKENNZEICHNET,**

daß das Halteelement einen Anschlag (23) aufweist, der mit einem fest mit der Ladefläche verbundenen Teil (24) zusammenwirkt, um ein Umklappen des Halteelementes nach außen zu verhindern.

2. Vorrichtung nach Anspruch 1, dadurch **gekennzeichnet,** daß der Stift (18) aus einer Verlängerung des Zapfens (8) besteht.

3. Vorrichtung nach Anspruch 2, dadurch **gekennzeichnet,** daß das fest mit der Ladefläche verbundene und mit dem Anschlag (23) zusammenwirkende Teil (24) aus der Außenseite eines Auflagers (26) besteht, dessen andere Seite (21) ihrerseits mit dem Ende (22) des Stiftes (18) so zusammenwirkt, daß sie zusammen die komplementären Sicherungsmittel bilden.

4. Vorrichtung nach Anspruch 3, dadurch **gekennzeichnet,** daß der Querriegel (24) sich über den gesamten Verlagerungsbereich des Halteelementes erstreckt.

5. Vorrichtung nach Anspruch 3 oder 4, dadurch **gekennzeichnet,** daß die fest mit der Ladefläche verbundene Auflagefläche (15) von der Unterseite des Tragteils (16) her ausgebildet ist, und daß der Querriegel (24) den Tragteilen (16) der Auflageflächen (15) zugeordnet ist.

6. Ladefläche (1) für ein Fahrzeug, dadurch **gekennzeichnet,** daß sie mit Verriegelungsvorrichtungen nach einem der Ansprüche 1 bis 5 ausgerüstet ist.

**Claims**

1. A device for locking containers on a loading platform of a vehicle such as railway wagon or a road vehicle, having the following characteristics :
— this platform (1) is intended to transport containers (3) whose base (4) is provided with positioning means (5) such as recesses, generally located in its four corners,
— the said device comprises holding members (7), each provided with means (8), such as a pin, intended to cooperate with one of the positioning means (5) and, in order to receive the said holding members (7), comprises a longitudinal rail (9) carried by supports (10) fixed to the platform (1),
— the rail (9) is associated with the supports (10) and with the holding members (7) so as to allow the articulation of the members (7) about the axis of the rail (9) which, for example, has a cylindrical rotational shape for this purpose and will be integral with the platform, whilst the holding member (7) will be formed by a plate (12) provided with a knuckle (13) which is attached to the rail (9) by its recess (14),
— the holding member (7) rests on a bearing plane (15) which is integral with the platform, such as the top of this platform, or is formed by the top of a bracket (16) made integral with the platform (1), this bearing plane (15) being located at least at all the points (X) where a pin (8) may be necessary, taking into account all the combinations of dimensions of the containers which the platform could carry,
— the opposite faces of, on the one hand, the bearing planes (15) of the holding members (7) and, on the other hand, these holding members themselves, are provided with complementary shapes (17, 18) which, without opposing the operation of the holding member, ensure that it is locked in its translational motion in the bearing plane, at least in a direction parallel to the longitudinal axis of the platform,
— the first complementary shape consists of a borehole (17) and the second consists of a finger (18) which is sufficiently short to allow these shapes (17, 18) to be disengaged from one another by lifting the holding member (7),
— between at least some of the points (X) where the pins (8) can be positioned, the rail presents no obstacle to the axial sliding of the holding member (7) which, after lifting, can thus be brought to face different points (X) and be locked there,

— at least between some of the successive points (X) where pins (8) can be positioned, on the one hand, the bearing plane (15) has at least one break (19), and, on the other hand, the holding member (7) and a part (20) associated with the platform (1) comprise complementary means (21, 22) for stopping the holding member (7) from engaging in the said break (19) in a position where the pin (8) disappears beneath the plane of the platform (1),

— this device being CHARACTERISED in that the holding member carries a limit stop (23) cooperating with a part (24) which is integral with the platform in order to prevent the holding member from swinging outwards.

2. A device according to Claim 1, characterised in that the finger (18) consists of an extension of the pin (8).

3. A device according to Claim 2, characterised in that the part (24), which is integral with the platform and cooperates with the limit stop (23), is formed by the external face of a support (26) whose other face (21) cooperates in turn with the end (22) of the finger (18) in order to form the complementary stopping means.

4. A device according to Claim 3, characterised in that the crosspiece (24) extends over the entire range of displacement of the holding member.

5. A device according to Claim 3 or 4, characterised in that the bearing plane (15), which is integral with the platform, is formed by the top of the bracket (16) and in that the crosspiece (24) is associated with the brackets (16) of the bearing planes (15).

6. A vehicle platform (1), characterised in that it is provided with locking means according to any one of Claims 1 to 5.

_Fig:1_

EP 0 292 369 B1

Fig:2.

. Fig.3 .

5

9

13

14

12

15

16

17

18

10

11

. Fig.4 .

7

23

24

26

20

21

22

19

EP 0 292 369 B1